# EUROPEAN PATENT APPLICATION

(11) **EP 3 832 255 A1**
(43) Date of publication of application: **09.06.2021**
(21) Application number: 19845074.4
(22) Date of filing: 29.07.2019
(51) Int. Cl.: G01B 11/25

(54) **THREE-DIMENSIONAL SCANNING METHOD AND SYSTEM**

(30) Priority: 01.08.2018 CN 201810860030
(71) Applicant: Shining3D Tech Co., Ltd., Hangzhou, Zhejiang 311258 (CN)
(72) Inventor: ZHAO, Xiaobo, Hangzhou, Zhejiang 311258 (CN); WANG, Wenbin, Hangzhou, Zhejiang 311258 (CN)
(74) Representative: Grünecker Patent- und Rechtsanwälte PartG mbB
(86) International application number: PCT/CN2019/098201
(87) International publication number: WO 2020/024910

(57) **Abstract**

The present invention relates to a three-dimensional scanning system configured to obtain three-dimensional data of a scanned object. The three-dimensional scanning system includes at least one projector configured to project a feature image of a first waveband to the scanned object, and the feature image includes multiple key features. A scanner includes a projection module configured to emit scanning light of a second waveband to a surface of the scanned object, and the first waveband is not interfere with the second waveband. A first collecting module is configured to collect the feature image projected to the scanned object, and obtain three-dimensional data of the key features projected to the surface of the scanned object. A second collecting module is configured to collect the scanning light of the second waveband reflected by the scanned object, and obtain dense three-dimensional point cloud data on the surface of the scanned object. According to the three-dimensional scanning system provided by embodiments of the present invention, interference between the collected feature image of the first waveband and the reflected scanning light of the second waveband is unlikely to occur, so that collected three-dimensional data is more accurate.

## Description

### Cross-Reference

The present invention claims priority of Chinese Patent Application No. 201810860030.8 filed on August 1, 2018. Contents of the present invention are hereby incorporated by reference in entirety of the Chinese Patent Application.

### Technical Field

The present invention relates to the field of three-dimensional digitization, and in particular to a three-dimensional scanning method and system.

### Background

At present, a three-dimensional scanning manner needs to paste points manually. Mark points or features are pasted on a surface of a measured object, and a photogrammetry is used for taking the mark points and obtaining three-dimensional data of the mark points. Then, the three-dimensional data of the mark points or features are input, and a scanner is used for performing spliced scanning around the measured object by means of the mark points or features. And after scanning, the pasted points need to be cleared manually, which wastes time and manpower.

### Summary

At least some embodiments of the present invention provide a three-dimensional scanning method and system, so as at least to partially solve a problem of time and manpower waste in a process of manually pasting points to obtain feature data in related art.

An embodiment of the present invention provides a three-dimensional scanning system configured to obtain three-dimensional data of a scanned object. The three-dimensional scanning system includes:
at least one projector, configured to project a feature image of a first waveband to the scanned object, wherein the feature image includes a plurality of key features; and
a scanner, including a projection module, a first collecting module corresponding to the at least one projector, and a second collecting module corresponding to the projection module, wherein the projection module is configured to emit scanning light of a second waveband to a surface of the scanned object, the first waveband is not interfere with the second waveband, the first collecting module is configured to collect the feature image projected to the scanned object, and obtain three-dimensional data of the key features projected to the surface of the scanned object, and the second collecting module is configured to collect the scanning light of the second waveband reflected by the scanned object, and obtain dense three-dimensional point cloud data on the surface of the scanned object.

In an optional embodiment, the three-dimensional data of the key features and the dense three-dimensional point cloud data synchronously collected by the first collecting module and the second collecting module are unified into single data in the same coordinate system.

In an optional embodiment, synchronous collection ranges of the first collecting module and the second collecting module at least partially overlap.

In an optional embodiment, the three-dimensional scanning system further includes a controller, and the controller is in communication connection with the scanner and is configured to establish a three-dimensional model of the scanned object according to the three-dimensional data of the key features and the dense three-dimensional point cloud data.

In an optional embodiment, the three-dimensional scanning system further includes a controller, the controller is in communication connection with the at least one projector, and the controller is configured to control the at least one projector to project a feature image corresponding to scanning requirements.

In an optional embodiment, the three-dimensional scanning system further includes a fixing device corresponding to the at least one projector, and the fixing device is configured to fix the at least one projector at at least one preset position around the scanned object.

Another embodiment of the present invention further provides a three-dimensional scanning method configured to obtain three-dimensional data of a scanned object. The three-dimensional scanning method includes:
projecting a feature image of a first waveband to the scanned object, wherein the feature image includes a plurality of key features;
emitting scanning light of a second waveband to a surface of the scanned object, wherein the second waveband is different from the first waveband;
collecting the feature image projected to the scanned object, and obtaining three-dimensional data of the key features projected to the surface of the scanned object; and
collecting the scanning light of the second waveband reflected by the scanned object, and obtaining dense three-dimensional point cloud data on the surface of the scanned object.

In an optional embodiment, the three-dimensional data of the key features and the dense three-dimensional point cloud data are synchronously collected, the three-dimensional data of the key features and the dense three-dimensional point cloud data synchronously collected are unified into single data in the same coordinate system, and a three-dimensional model of the scanned object is established according to pieces of the single data.

In an optional embodiment, the three-dimensional scanning method further includes:
performing rigid body transformation on common key features among the pieces of the single data, splicing residuals and performing non-linear least square method iterative optimization to complete a high accuracy of global optimization and reduce an accumulated error of the pieces of the single data.

In an optional embodiment, the three-dimensional scanning method further includes:
performing jointed weighted optimization between the three-dimensional data of the key features and the dense three-dimensional point cloud data through an Iterative Closest Point (ICP) algorithm.

In an optional embodiment, the three-dimensional scanning method further includes:
fusing the pieces of the single data after optimization into an overall point cloud through a Fusion algorithm, and converting the overall point cloud into an overall surface patch through triangulation.

The three-dimensional scanning system provided by the embodiments of the present invention projects the feature image of the first waveband to the scanned object, and emits the scanning light of the second waveband to the surface of the scanned object, and the first waveband and the second waveband do not interfere with each other. Interference between the collected feature image of the first waveband and the reflected scanning light of the second waveband is unlikely to occur, so that the collected three-dimensional data is more accurate.

### Brief Description of the Drawings

Fig. 1 is a schematic diagram of a three-dimensional scanning system according to an embodiment of the present invention.
Fig. 2 is a schematic diagram of an application environment of a three-dimensional scanning system according to a first optional embodiment of the present invention.
Fig. 3 is a schematic diagram of an application environment of a three-dimensional scanning system according to a second optional embodiment of the present invention.
Fig. 4 is a flowchart of a three-dimensional scanning method according to an embodiment of the present invention.

### Detailed Description

In order to facilitate the understanding of the present invention, the present invention will be described more fully below with reference to related drawings. The drawings show preferred embodiments of the present invention. However, the present invention may be implemented in many different forms and is not limited to the embodiments described herein. On the contrary, the purpose of providing these embodiments is to make the understanding of the content of the present invention more thorough and comprehensive.

Unless otherwise defined, all technical and scientific terms used herein have the same meanings as commonly understood by those skilled in the art of the present invention. The terms used in the specification of the present invention herein are for the purpose of describing specific embodiments, and are not intended to limit the present invention. The term "and/or" as used herein includes any and all combinations of one or more of the related listed items.

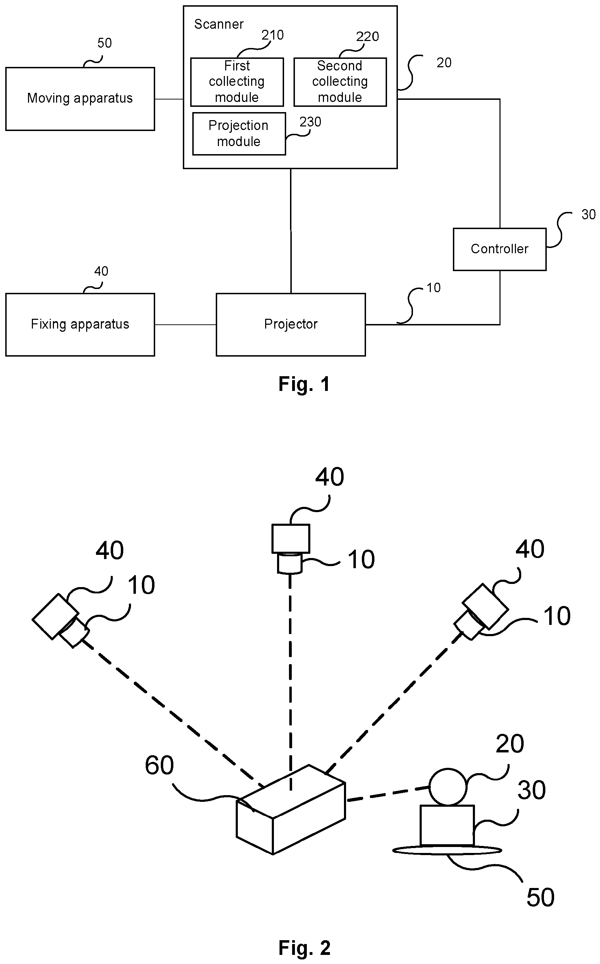

Fig. 1 is a schematic diagram of a three-dimensional scanning system according to an embodiment of the present invention. As shown in Fig. 1, the three-dimensional scanning system includes a projector 10, a scanner 20 and a controller 30.

The at least one projector 10 is configured to project a feature image of a first waveband to a scanned object 60, and the feature image includes multiple key features.

Optionally, the at least one projector 10 is configured to project the feature image of the first waveband to the scanned object 60. Specifically, the first waveband may be any one of a visible light waveband and an invisible light waveband. In an optional embodiment, the first waveband is an invisible light waveband. As an optional example, the first waveband is a waveband of 815 to 845 nm in the invisible light waveband. Further, the feature image of the first waveband adopts a specific wavelength, and the wavelength is 830 nm.

The three-dimensional scanning system further includes a fixing device 40 corresponding to the at least one projector 10. Optionally, the fixing device 40 fixes the at least one projector 10 at at least one preset position around the scanned object 60. Specifically, the fixing device 40 can fix the at least one projector 10 at any suitable position on a wall, a bracket or other objects, and the at least one projector 10 projects the feature image of the first waveband to the scanned object 60. The fixing device 40 can stabilize the at least one projector 10 to avoid shaking of the at least one projector 10, so that the feature image of the first waveband projected by the at least one projector 10 is more accurate, so as to improve the scanning accuracy.

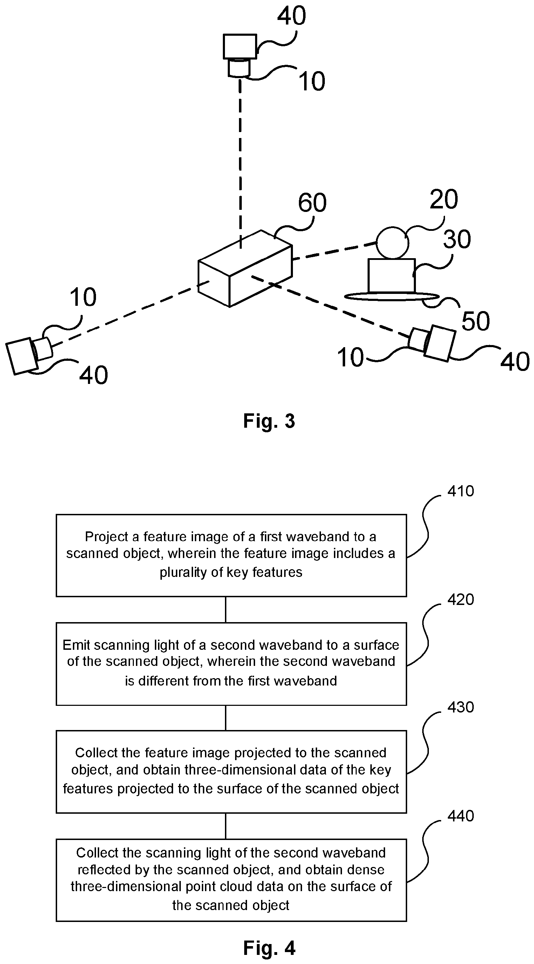

Optionally, there are multiple projectors 10, and the multiple projectors 10 are arranged at intervals in a predetermined manner. In an optional embodiment, as shown in Fig. 2, the multiple projectors 10 are arranged around the scanned object 60 along a spatial arc. It can be understood that the multiple projectors 10 may also be distributed on a spatial spherical surface. In another optional embodiment, as shown in Fig. 3, the multiple projectors 10 are distributed around the scanned object 60 along different coordinate positions of a spatial three-dimensional rectangular coordinate system. Of course, there may be one projector, as long as an area to be scanned of the scanned object can be covered by a projection area of this one projector.

In an optional embodiment, the feature images of the first waveband, projected by the multiple projectors 10, are collected by one scanner 20.

The scanner 20 includes a projection module 230, a first collecting module 210 corresponding to the at least one projector 10, and a second collecting module 220 corresponding to the projection module.

The projection module 230 is configured to emit scanning light of a second waveband to a surface of the scanned object 60. Specifically, the second waveband may be any one of a visible light waveband and an invisible light waveband. In an optional embodiment, the second waveband is a visible light waveband. As an optional example, the second waveband is a waveband of 440 to 470 nm in the visible light waveband. Further, the scanning light of the second waveband adopts a specific wavelength, and the wavelength is 455 nm.

Optionally, the first waveband projected by the at least one projector 10 is not interfere with the second waveband emitted by the scanner. The first waveband and the second waveband may both belong to the visible light waveband or invisible light waveband, as long as the first waveband and the second waveband have different waveband ranges and different wavelengths. For example, the first waveband is 500 to 550 nm, and the second waveband is 560 to 610 nm. Even if the first waveband and the second waveband belong to the visible light waveband, the waveband ranges and wavelengths are different. During collection of the first collecting module 210 and the second collecting module 220, the interference between the first waveband and the second waveband is unlikely to occur.

The first collecting module 210 collects the feature image of the first waveband, the second collecting module 220 collects the reflected scanning light of the second waveband, and interference between the wavebands collected by the first collecting module 210 and the second collecting module 220 is unlikely to occur, so that the collected three-dimensional data is more accurate.

The first collecting module 210 is configured to collect the feature image projected to the scanned object 60, obtain three-dimensional data of the key features projected to the surface of the scanned object, and send the collected three-dimensional data of the key features to the controller 30. The collection of the first collecting module 210 is not interfered by the scanning light of the second waveband.

The second collecting module 220 is configured to collect the scanning light of the second waveband reflected by the scanned object 60, obtain dense three-dimensional point cloud data on the surface of the scanned object, and send the collected dense three-dimensional point cloud data to the controller 30. The collection of the second collecting module 220 is not interfered by the feature image of the first waveband.

Optionally, the three-dimensional data of the key features and the dense three-dimensional point cloud data synchronously collected by the first collecting module 210 and the second collecting module 220 are unified into single data in the same coordinate system, thereby improving the data processing efficiency of the scanner 20 and increasing the speed for subsequent establishment of the three-dimensional model of the scanned object. Optionally, the three-dimensional data of the key features and the dense three-dimensional point cloud data collected by the first collecting module 210 and the second collecting module 220 at the same time sequence are unified into single data in the same coordinate system. In actual operations, the first collecting module 210 and the second collecting module 220 may generate a certain error, and the controller 30 sorts the three-dimensional data of the key features and the dense three-dimensional point cloud data to obtain three-dimensional data with higher accuracy.

In an optional embodiment, before the scanner 20 leaves the factory, the coordinate systems of the first collecting module 210 and the second collecting module 220 are unified. Further, before the scanner 20 collects the three-dimensional data of the key features and the dense three-dimensional point cloud data, the coordinate systems of the first collecting module 210 and the second collecting module 220 are unified, so that the three-dimensional data of the key features and the dense three-dimensional point cloud data synchronously collected are easily unified into single data in the same coordinate system.

Optionally, the synchronous collection ranges of the first collecting module 210 and the second collecting module 220 at least partially overlap. Optionally, the synchronous collection ranges of the first collecting module and the second collecting module are the same or nearly the same, so that the three-dimensional data of the key features and the dense three-dimensional point cloud data synchronously collected are easily unified into single data in the same coordinate system, so as to obtain three-dimensional data with higher accuracy.

The three-dimensional scanning system further includes a moving apparatus 50, and the scanner 20 is arranged on the moving apparatus 50. The moving apparatus 50 can drive the scanner 20 to move relative to the scanned object 60, so that the scanner 20 collects the feature image of each surface of the scanned object 60 and reflected scanning light in multiple angles.

The controller 30 is in communication connection with the scanner 20 and is configured to establish a three-dimensional model of the scanned object 60 according to the three-dimensional data of the key features and the dense three-dimensional point cloud data. The communication connection includes any one of wired connection and wireless connection. The controller may be an independent device or may be integrated with the scanner. In an optional embodiment, the controller 30 is integrated in the scanner 20. In another embodiment, the controller 30 is an independent device which is in communication connection with the at least one projector 10 and the scanner 20, receives the three-dimensional data of the key features and the dense three-dimensional point cloud data collected by the scanner 20, and controls the at least one projector 10 and the scanner 20.

The controller 30 is in communication connection with the at least one projector 10, and the controller 30 controls the at least one projector 10 to project a corresponding feature image according to scanning requirements.

Optionally, the controller 30 controls the projection light intensity of the at least one projector 10 and the image types of the key features in the feature image according to scanning requirements. Specifically, the image types include a cross line, a circle, or other images that can be projected to the surface of an object to collect the three-dimensional data of the key features. In an optional embodiment, an image type is a cross line, and the cross line can enable the first collecting module 210 to collect the three-dimensional data of the key features more accurately.

The controller 30 obtains the three-dimensional data of the key features and the dense three-dimensional point cloud data collected by the scanner 20, processes the three-dimensional data of the key features and the dense three-dimensional point cloud data synchronously collected to obtain single data, and establishes the three-dimensional model of the scanned object 60 according to pieces of the single data.

Fig. 4 is a flowchart of a three-dimensional scanning method according to an embodiment of the present invention. As shown in Fig. 4, the method may include the following processing steps.

At step 410: a feature image of a first waveband is projected to a scanned object. The feature image includes a plurality of key features.

The at least one projector 10 projects the feature image of the first waveband to the scanned object 60. The first waveband may be any one of a visible light waveband and an invisible light waveband. As an optional example, the first waveband is a waveband of 815 to 845 nm in the invisible light waveband. Further, the feature image of the first waveband adopts a specific wavelength, and the wavelength is 830 nm.

At step 420: scanning light of a second waveband is emitted to a surface of the scanned object. The second waveband is different from the first waveband.

The projection module 230 in the scanner 20 emits the scanning light of the second waveband to the surface of the scanned object 60. The second waveband may be any one of a visible light waveband and an invisible light waveband. As an optional example, the second waveband is a waveband of 440 to 470 nm in the visible light waveband. Further, the scanning light of the second waveband adopts a specific wavelength, and the wavelength is 455 nm.

The first waveband projected by the at least one projector 10 and the second waveband emitted by the projection module 230 of the scanner are different. And interference between the feature image of the first waveband collected by the scanner 20 and the reflected scanning light of the second waveband is unlikely to occur, so that the collected three-dimensional data is more accurate.

At step 430: the feature image projected to the scanned object is collected, and three-dimensional data of the key features projected to the surface of the scanned object is obtained.

The first collecting module 210 in the scanner 20 collects the feature image projected to the scanned object 60, obtains the three-dimensional data of the key features on the surface of the scanned object 60, and sends the collected three-dimensional data to the controller 30.

At step 440: the scanning light of the second waveband reflected by the scanned object is collected, and dense three-dimensional point cloud data on the surface of the scanned object is obtained.

The second collecting module 220 in the scanner 20 collects the scanning light of the second waveband reflected by the scanned object 60, obtains the dense three-dimensional point cloud data of the scanned object 60, and sends the collected dense three-dimensional point cloud data to the controller 30.

The three-dimensional data of the key features and the dense three-dimensional point cloud data are synchronously collected, the three-dimensional data of the key features and the dense three-dimensional point cloud data synchronously collected are unified into single data in the same coordinate system, and the controller 30 establishes a three-dimensional model of the scanned object according to pieces of the single data.

The method includes: performing rigid body transformation through common key features between the pieces of the single data, splicing residuals, and performing non-linear least square method iterative optimization, thereby completing the high accuracy of global optimization and reducing the accumulated error of the pieces of the single data.

The three-dimensional scanning method further includes the following steps. Jointed weighted optimization is performed between the three-dimensional data of the key features and the dense three-dimensional point cloud data through an ICP algorithm.

After the step that the jointed weighted optimization is performed between the three-dimensional data of the key features and the dense three-dimensional point cloud data through the ICP algorithm, the method further includes the following steps. The pieces of the single data after data optimization are fused into an overall point cloud through a Fusion algorithm, and the overall point cloud is converted into an overall surface patch through triangulation.

The controller 30 performs rigid body transformation on common key features among the pieces of the single data, residuals are spliced, and non-linear least square method iterative optimization is performed to complete a high accuracy of global optimization and reduce an accumulated error of the pieces of the single data. The pieces of the single data after splicing are fused into the overall point cloud through the Fusion algorithm, the overall point cloud is converted into the overall surface patch through triangulation, and then, the three-dimensional model of the scanned object is established.

The three-dimensional scanning system and method provided by the present invention project the feature image of the first waveband to the scanned object 60, and emit the scanning light of the second waveband to the surface of the scanned object 60, and the first waveband is not interfere with the second waveband. Interference between the collected feature image of the first waveband and the reflected scanning light of the second waveband is unlikely to occur, so that the collected three-dimensional data is more accurate.

The technical features of the above embodiments can be combined arbitrarily. In order to make the description concise, all possible combinations of various technical features in the above embodiments are not completely described. However, as long as there is no contradiction in the combination of these technical features, it should be regarded as the scope of this specification.

The above embodiments express several implementations of the present invention, and the descriptions are relatively specific and detailed, but they should not be understood as limitation of the patent scope of the present invention. It should be noted that for those of ordinary skill in the art, without departing from the concept of the present invention, several modifications and improvements can be made, and these all fall within the protection scope of the present invention. Therefore, the protection scope of the present invention should be subject to the appended claims.

## Claims

1. A three-dimensional scanning system, configured to obtain three-dimensional data of a scanned object, wherein the three-dimensional scanning system comprises:
at least one projector, configured to project a feature image of a first waveband to the scanned object, wherein the feature image comprises a plurality of key features; and
a scanner, comprising a projection module, a first collecting module corresponding to the at least one projector, and a second collecting module corresponding to the projection module, wherein the projection module is configured to emit scanning light of a second waveband to a surface of the scanned object, the first waveband is not interfere with the second waveband, the first collecting module is configured to collect the feature image projected to the scanned object, and obtain three-dimensional data of the key features projected to the surface of the scanned object, and the second collecting module is configured to collect the scanning light of the second waveband reflected by the scanned object, and obtain dense three-dimensional point cloud data on the surface of the scanned object.

2. The three-dimensional scanning system as claimed in claim 1, wherein the three-dimensional data of the key features and the dense three-dimensional point cloud data synchronously collected by the first collecting module and the second collecting module are unified into single data in the same coordinate system.

3. The three-dimensional scanning system as claimed in claim 2, wherein synchronous collection ranges of the first collecting module and the second collecting module at least partially overlap.

4. The three-dimensional scanning system as claimed in claim 1, wherein the three-dimensional scanning system further comprises a controller, and the controller is in communication connection with the scanner and is configured to establish a three-dimensional model of the scanned object according to the three-dimensional data of the key features and the dense three-dimensional point cloud data.

5. The three-dimensional scanning system as claimed in claim 1, wherein the three-dimensional scanning system further comprises a controller, the controller is in communication connection with the at least one projector, and the controller is configured to control the at least one projector to project a feature image corresponding to scanning requirements.

6. The three-dimensional scanning system as claimed in claim 1, wherein the three-dimensional scanning system further comprises a fixing device corresponding to the at least one projector, and the fixing device is configured to fix the at least one projector at at least one preset position around the scanned object.

7. A three-dimensional scanning method, configured to obtain three-dimensional data of a scanned object, wherein the three-dimensional scanning method comprises:
projecting a feature image of a first waveband to the scanned object, wherein the feature image comprises a plurality of key features;
emitting scanning light of a second waveband to a surface of the scanned object, wherein the second waveband is different from the first waveband;
collecting the feature image projected to the scanned object, and obtaining three-dimensional data of the key features projected to the surface of the scanned object; and
collecting the scanning light of the second waveband reflected by the scanned object, and obtaining dense three-dimensional point cloud data on the surface of the scanned object.

8. The three-dimensional scanning method as claimed in claim 7, wherein the three-dimensional data of the key features and the dense three-dimensional point cloud data are synchronously collected, the three-dimensional data of the key features and the dense three-dimensional point cloud data synchronously collected are unified into single data in the same coordinate system, and a three-dimensional model of the scanned object is established according to pieces of the single data.

9. The three-dimensional scanning method as claimed in claim 8, wherein the three-dimensional scanning method further comprises:
performing rigid body transformation on common key features among the pieces of the single data, splicing residuals and performing non-linear least square method iterative optimization to complete a high accuracy of global optimization and reduce an accumulated error of the pieces of the single data.

10. The three-dimensional scanning method as claimed in claim 9, wherein the three-dimensional scanning method further comprises:
performing jointed weighted optimization between the three-dimensional data of the key features and the dense three-dimensional point cloud data through an Iterative Closest Point, ICP, algorithm.

11. The three-dimensional scanning method as claimed in claim 10, wherein the three-dimensional scanning method further comprises:
fusing the pieces of the single data after optimization into an overall point cloud through a Fusion algorithm, and converting the overall point cloud into an overall surface patch through triangulation.
